# EUROPÄISCHE PATENTANMELDUNG

(11) **EP 1 630 141 A1**
(43) Veröffentlichungstag der Anmeldung: **01.03.2006**
(21) Anmeldenummer: 05014834.5
(22) Anmeldetag: 08.07.2005
(51) Int. Cl.: C03C 17/06, C09D 11/10, C09D 5/38

(54) **Verfahren zur Prüfmarkierung von Glas und Verfahren zum Nachweis der bei der Erzeugung der Prüfmarkierung herrschenden Temperatur- und Zeitbedingungen**

(30) Priorität: 21.07.2004 DE 102004035239
(71) Anmelder: Boraglas GmbH, 06120 Halle/Saale (DE)
(72) Erfinder: Thomas, Rainer, Dr., 38855 Wernigerode (DE)
(74) Vertreter: Katzameyer, Michael

(57) **Zusammenfassung**

Die Erfindung betrifft ein neues, zuverlässiges und fälschungssicheres Verfahren zur temperaturinduzierten Markierung von Glas sowie Beschichtungszusammensetzungen zur Verwendung bei dieser Markierung und Nachweisverfahren zur Überprüfung der Durchführung einer Wärmebehandlung bei Glas.

## Beschreibung

Die vorliegende Erfindung betrifft ein neues, zuverlässiges und fälschungssicheres Verfahren zur temperaturinduzierten Markierung bzw. Prüfmarkierung von Glas sowie Beschichtungszusammensetzungen zur Verwendung bei dieser Markierung und Nachweisverfahren zur Überprüfung der Durchführung einer Wärmebehandlung bei Glas.

Ein bekanntes Problem bei Glas, insbesondere bei grossflächigem Fassadenglas, besteht in dem spontanen Auftreten von Brüchen aufgrund von Temperaturveränderungen, die zu Spannungen im Glas führen. Aus diesem Grunde ist seit Beginn des Jahres 2003 vor dem Einbau von Fassadenglas ein sogenannter Heißlagerungstest (HST) gesetzlich vorgeschrieben, bei dem das Glas einer Wärmebehandlung von 4 Stunden bei 280°C unterworfen wird. Bei korrekter Durchführung dieses Tests ist das Risiko eines späteren Spontanbruchs wesentlich geringer.

Allerdings wird der Test aus Zeit- und Kostengründen häufig abgekürzt und/oder bei einer zu niedrigen oder zu hohen Temperatur durchgeführt. Deshalb wird seit einiger Zeit ein Markierungssystem angeboten, bei dem die Glasoberfläche mit einer thermochromen Farbe markiert wird, die bei Erwärmung über 280°C einen Farbumschlag zeigt und sich bei Erwärmung auf eine Temperatur von deutlich mehr als 280°C zersetzt. Nachteilig bei diesen Markern des Standes der Technik (z.B. SECURIT H)ist jedoch, dass der Farbumschlag häufig bereits vor Ablauf der vorgeschriebenen Zeit von 4 Stunden eintritt und somit kein zuverlässiges Testresultat ergibt. Außerdem befindet sich die Markierung außen auf der Glasoberfläche und ist somit Fälschungsversuchen zugänglich.

Demgemäß bestehen die Aufgaben der vorliegenden Erfindung in der Bereitstellung eines verbesserten, zuverlässigen und fälschungssicheren Verfahrens zur temperaturinduzierten Markierung bzw. Prüfmarkierung von Glas und in der Bereitstellung eines Nachweisverfahrens zur Überprüfung der Durchführung einer Wärmebehandlung bei Glas.

Diese Aufgaben werden mit Verfahren und Beschichtungszusammensetzungen mit den Merkmalen der Patentansprüche 1, 19, 21 und 22 gelöst. Vorteilhafte Ausführungsformen der Erfindung sind Gegenstand der abhängigen Ansprüche.

Im Gegensatz zum obengenannten Stand der Technik beruhen die erfindungsgemäßen Markierungs- und Nachweisverfahren auf einer Markierung im Glasinneren. Solche Markierungen sind zwar grundsätzlich bekannt, wurden jedoch bei bei sehr viel höheren Temperaturen (DD 215 776) und/oder unter Anwendung eines Lasers (DE 102 50 408) durchgeführt.

Die vorliegende Erfindung beruht auf dem überraschenden Befund, dass bereits bei einer Temperatur von weniger als 400°C, insbesondere gerade in dem gewünschten speziellen Temperaturbereich von etwa 280°C bis 320°C, eine zuverlässige, lediglich temperatur-induzierte Markierung von Glas möglich ist, indem eine Beschichtungszusammensetzung, die mindestens eine Metallverbindung, vorzugsweise eine Silberverbindung, enthält, auf das Glas aufgebracht und anschliessend eine Wärmebehandlung bei den genannten Temperaturen durchgeführt wird. Zur Erzielung der Markierung ist vorzugsweise eine mehrstündige Wärmebehandlung, zum Beispiel für mindestens 4 Stunden, bei einer Temperatur von weniger als 400°C, vorzugsweise zwischen etwa 280°C und etwa 320°C, vorgesehen.

Die Metallionen der Metallverbindung diffundieren dabei in das Glas und werden dort von Ionen des Glases (zum Beispiel Sn²⁺) oder externen Reduktionsmitteln (zum Beispiel H₂) zu den entsprechenden Metallatomen reduziert, welche sich zu Partikeln zusammenlagern und das Glas verfärben. Diese Partikelbildung, welche maßgeblich für die resultierende Verfärbung ist, war bei der bevorzugten niedrigen Temperatur von etwa 280 bis etwa 320°C, also wesentlich unterhalb der Glasübergangstemperatur von etwa 550°C, sehr überraschend.

Die Verfärbung, insbesondere eine Kontraststeigerung oder Absorptionserhöhung, kann sogar visuell ohne optische Hilfsmittel festgestellt werden. Außerdem ist der Grad der Verfärbung von der Dauer der Wärmebehandlung abhängig.

Die reduzierenden Ionen des Glases sind vorwiegend Zinnionen. Deshalb wird bei einer Markierung des handelsüblichen "Floatglases", das eine relativ zinnreiche Oberfläche (Badseite) und eine relativ zinnarme Oberfläche (Luftseite) aufweist, die Beschichtungszusammensetzung auf die relativ zinnreiche Oberfläche aufgebracht, um die Reduktionsreaktion zu fördern.

Der Farbton bzw. die Stärke der Verfärbung des Glases ist abhängig von der Dauer und Temperatur der Wärmebehandlung. Dies bedeutet, dass die vorliegende Erfindung nicht nur ein Markierungsverfahren und einen qualitativen Nachweis einer erfolgten Wärmebehandlung und Markierung des Glases bereitstellt, sondern auch eine quantitative Bestimmung der Zeitdauer und/oder Temperatur der Wärmebehandlung ermöglicht, indem das markierte Probenglas mit einer Referenz verglichen wird.

Demgemäß betrifft die vorliegende Erfindung in einem bevorzugten Aspekt ein Nachweisverfahren zur Feststellung der Dauer und/oder angewandten Temperatur einer Wärmebehandlung bei einem Glas, auf welches eine Beschichtungszusammensetzung wie in einem der Ansprüche 1, 4- 7 und 11 definiert oder eine Beschichtungszusammensetzung nach einem der Ansprüche 19 und 20 aufgebracht und welches einer solchen Wärmebehandlung unterworfen wurde, wobei die Verfärbung des Glases mit der Verfärbung eines Referenzglases, das einer bekannten Wärmebehandlung unterworfen wurde, visuell verglichen oder mit einem Photometer, zum Beispiel einem Spektrometer gemessen und mit Referenzwerten verglichen wird.

Spezieller betrifft die Erfindung in einem besonders bevorzugten Aspekt ein Nachweisverfahren zur Prüfung, ob ein Glas, auf welches eine Beschichtungszusammensetzung wie in einem der Ansprüche 1, 4 - 7 und 11 definiert oder eine Beschichtungszusammensetzung nach einem der Ansprüche 19 und 20 aufgebracht wurde, einer Wärmebehandlung von 4 Stunden bei 280 - 320 °C unterworfen wurde, wobei die Verfärbung des Glases mit der Verfärbung eines Referenzglases, das dieser Wärmebehandlung bekanntermaßen unterworfen wurde, visuell verglichen oder mit einem Photometer, zum Beispiel einem Spektrometer gemessen und mit Referenzwerten verglichen wird.

Als reduzierbare Metallverbindungen für die Beschichtungszusammensetzung sind grundsätzlich alle Metallverbindungen geeignet, deren Metallionen bei einer Temperatur von weniger als 400°C, vorzugsweise bei einer Temperatur zwischen 280 und 320 °C, in das Glas diffundieren und z.B. von den Ionen des Glases reduziert werden können und sich zu Partikeln zusammenlagern können. Vorzugsweise handelt es sich dabei um Gold-, Silber- oder Kupferverbindungen, besonders bevorzugt um Silberverbindungen, da Silberionen leicht reduzierbar sind und Silberpartikel ein besonders deutliche braune Verfärbung ergeben.

Die eingesetzten reduzierbaren Metallverbindungen, insbesondere Silberverbindungen, weisen vorzugsweise eine hohe Löslichkeit in Wasser oder einem organischen Lösungsmittel auf. Dies erleichtert die Herstellung einer geeigneten Beschichtungszusammensetzung.

Bevorzugte, nicht beschränkende, Beispiele für geeignete Silberverbindungen sind Silbersalze, wie z.B. Silbernitrat, Silberfluorid, Silberacetat, Silberchlorat, Silberperchlorat, Silbercitrat etc., sowie Silberkomplexe.

In einer bevorzugten Ausführungsform der Erfindung umfasst die Beschichtungszusammensetzung neben der reduzierbaren Metallverbindung noch mindestens eine andere Metallverbindung. Dieses zweite Metallverbindung kann z.B. dazu dienen, den Schmelzpunkt der Mischung zu veringern und die Diffusion der reduzierbaren Metallionen in das Glas zu beschleunigen. Ein Beispiel dafür ist Kaliumnitrat in Kombination mit Silbernitrat. Besonders bevorzugt ist das Mengenverhältnis von Kaliumnitrat und Silbernitrat derart, dass eine eutektische Mischung vorliegt.

In einer speziellen Ausführungsform umfasst die Beschichtungszusammensetzung neben der Silberverbindung noch eine Zirkoniumverbindung. Daraus können sich Vorteile für eine besonders kontrastreiche Schwärzungswirkung oder Einfärbung des behandelten Glases ergeben.

Gewünschtenfalls kann die Beschichtungszusammensetzung noch ein Reduktionsmittel enthalten, mit dem die Metallionen der reduzierbaren Metallverbindung reduzierbar sind. Reduktionsmittel umfassen vorzugsweise Kupfer(I)- und/oder Zinn(II)- und/oder Eisen(II)- und/oder Blei(II)- und/oder Kobalt(II)- und/oder Titan(II)-Verbindungen und/oder Komplexsysteme wie Iridium (II)-Hexachlorid und/oder Cyanoferrate(II). Die Reduktionsmittel sind in der Lage, mit in das Glas zu diffundieren und dort den Reduktionsprozess der Metallionen zu verstärken.

Die Geschwindigkeit und der Grad der Verfärbung kann durch die Konzentration der reduzierbaren Metallverbindung und gegebenenfalls des zusätzlichen Reduktionsmittels in der Beschichtungszusammensetzung nach Bedarf eingestellt werden. Die Konzentration der reduzierbaren Metallverbindung, insbesondere Silberverbindung, wird in der Regel in einem Bereich von 0,1 bis 50, bevorzugter 1 bis 30, besonders bevorzugt 4 bis 14 Masseprozent der Beschichtungszusammensetzung liegen.

Weitere Vorteile in Bezug auf die Bildung besonders homogener und stabiler Schichten können sich ergeben, wenn die Beschichtungszusammensetzung mindestens eine Zusatzsubstanz enthält, mit der die Viskosität, das Volumen, die Trocknungs- und Verdampfungsgeschwindigkeit, die Benetzbarkeit und/oder die Haltbarkeit der Beschichtungszusammensetzung beeinflussbar ist. Beispiele dafür sind Desinfektionsmittel im Falle der Verwendung von Gelatine als Bindemittelmatrix, oder Verlaufsmittel, um eine gute und rasche Spreitung des auf die Unterlage aufgebrachten Beschichtungsmediums zu sichern, oder Viskositätssteigerer und Antiabsetzverbindungen, die zu einer besseren Haltbarkeit des Beschichtungsmediums führen und einer Entmischung entgegenwirken, und im Falle der Anwendung der Beschichtungsmedien als Paste eine bessere Schichtgleichmäßigkeit bewirken.

Der Zusatz von Trocknungsregulatoren, wie etwa Silane, trägt ebenfalls zu einer Verbesserung der Gleichmäßigkeit der aufgetragenen Schicht bei.

Weitere Vorteile können sich ergeben, wenn die Beschichtungszusammensetzung Zusätze von Farbstoffen und/oder Pigmenten und/oder von Haftverbesserern und/oder Netzmitteln enthält. Mit Farbstoffen oder Pigmenten kann die Erkennbarkeit einer auf das Glas aufgebrachten Schicht erhöht werden. Ferner können, beispielsweise um die Oberflächenspannung der Beschichtungsmedien möglichst niedrig zu halten und eine Beschichtung ohne Benetzungsstörungen auf der Glas- oder Folienoberfläche realisieren zu können, in den Beschichtungsgemischen Netzmittel und Haftverbesserer verwendet werden. Als solche können alle an sich von photographischen Emulsionen oder aus anderen Bereichen der Beschichtungstechnik her bekannten Netzmittel wie beispielsweise Fluortenside, Dismulgane, höhermolekulare Alkylarylether, Polyethylenglykole usw. verwendet werden.

Das Gewichtsverhältnis von Metallverbindung(en) und Bindemittel wird je nach der Art der Aufbringung der Beschichtungszusammensetzung variieren.

Das oder die verwendete(n) Bindemittel müssen in einer solchen Menge vorhanden sein, dass durch die Bindemittelmatrix die Haftung der Metallverbindungen und anderer in den Beschichtungsmedien enthaltenen Verbindungen mit der Glasoberfläche sicher gestellt ist. Das Metallverbindung-Bindemittel-Gewichtsverhältnis wird je nach dem geplanten Anwendungsverfahren typischerweise im Bereich von 0,05 bis 8000, insbesondere im Bereich von 1 bis 4000, gewählt werden. In besonderen Fällen könnten jedoch auch andere Gewichtsverhältnisse geeignet sein.

Besonders günstig für die Markierung ist jedes Glas mit einem ausreichenden Eigengehalt an reduzierenden Ionen, insbesondere jedes Floatglas, in dem die Verfärbung nach der Markierung sichtbar ist. Neben klarem Glas kann milchiges Glas oder an sich vorgefärbtes Glas verwendet werden. Die Markierung ist irreversibel und nicht verwisch- oder verwitterbar.

Gemäß einer ersten Ausführungsform des erfindungsgemäßen Markierungsverfahrens bzw. Prüfmarkierungsverfahrens erfolgt die Beschichtung der Glasoberfläche durch einen Auftrag (Deposition) der Beschichtungszusammensetzung im flüssig gelösten Zustand, vorzugsweise durch ein Aufsprühen, Ausgießen, Aufwalzen oder Aufrakeln. Vorteilhafterweise können dadurch gekrümmte und verwinkelte Oberflächen gleichmäßig beschichtet werden.

Gemäß einer weiteren Ausführungsform des erfindungsgemäßen Markierungsverfahrens erfolgt die Beschichtung durch einen Auftrag der Beschichtungszusammensetzung im festen Schichtzustand. Vorzugweise umfasst dieser Auftrag ein Anhaften einer selbsttragenden Folie der Beschichtungszusammensetzung (Dicke vorzugsweise 5 µm oder größer) auf der Glasoberfläche oder eines Verbundes aus der Beschichtungszusammensetzung und einer Trägerfolie auf der Glasoberfläche. Die Trägerfolie kann je nach Temperaturstabilität vor oder nach der Wärmebehandlung wieder abgezogen werden. Die Folie der Beschichtungszusammensetzung oder die Trägerfolie ist vorzugsweise selbstklebend.

Bei einem direkten Auftrag der Beschichtungszusammensetzung, z.B. als Lösung oder Pasten, können diese nach der Wärmebehandlung wieder abgewaschen werden. Gewünschtenfalls können die Bindemittel in Bezug auf einen wirksamen Abtrag durch Abwaschen optimiert werden.

Als Lösungsmittel für die Beschichtungszusammensetzung kommen grundsätzlich alle Lösungsmittel in Frage, welche ausreichend hohe Konzentrationen an gelösten Metallverbindungen erlauben. Bevorzugte Beispiele sind Wasser, Alkohole, Ketone oder Ether und ihre Mischungen. Besonders vorzugt sind Mischungen von Wasser und einem damit mischbaren organischen Lösungsmittel, z.B. einem niederen Alkolhol wie Ethanol.

Insbesondere für den Fall der Aufbringung der Beschichtungszusammensetzung nach dem Sprühverfahren sind Lösungsmittel bzw. Lösungsmittelkombinationen bevorzugt, die einerseits hinsichtlich ihres Lösungsvermögens einen ausreichend hohen Gehalt an Metallverbindungen zulassen und andererseits auch die verwendeten Bindemittel nicht ausflocken, sondern ihre vollständige oder kolloidale Lösung ermöglichen. Je nach dem gewählten Bindemittel können das beispielsweise Wasser, Alkohole, Ketone oder Ether und ihre Mischungen sein.

Je nach Auftragsverfahren ist es bevorzugt, wenn die Lösungsmittel neben dem Lösungsvermögen für die Metallverbindungen und Bindemittel (Polymere) untereinander mischbar sind. Für den Fall der Anwendung der Beschichtungsmedien im Sprühverfahren mit Zwei- oder Mehrfachdüsentechnik ist diese Mischbarkeit in geringerem Maße erforderlich.

Als Bindemittel können beispielsweise die von der Herstellung fotografischer Emulsionen her bekannten natürlichen Polymere, wie z. B. Gelatine, Casein, Albumin, Polysaccharide, oder künstliche Polymere, wie z. B. Polyethylenglykole, Polyvinylalkohole, Polyvinylpyrrolidone, Celluloseactate, Polyvinylformale und -butyrale, Polystyrole, Copolymere aus Vinylchlorid und Vinylacetat, Hyaluronsäure usw. eingesetzt werden. Es können alternativ Gemische aus mehreren Bindemitteln verwendet werden.

Für den Fall des Einsatzes von Folien können beispielsweise Folien aus Polycarbonat, Polyethylen, Polyethylenterephthalat, Polyethylennaphthalat, Cellulosetriacetat, Polyvinylchlorid, Polypropylene usw. verwendet werden. Vorteilhaft dabei ist eine möglichst niedrige Folienstärke, um eine hohe Anschmiegsamkeit an das Glas und damit einen möglichst engen Kontakt von Beschichtungszusammensetzung und Glas zu erreichen.

Bei dem Verfahren unter Anwendung von Folien wie auch bei den anderen genannten Auftragungsarten der Beschichtungsmedien auf die Glasoberfläche ist eine möglichst rasche Trocknung der aufgebrachten Beschichtungsmedien vorteilhaft. Hierzu erfolgt eine Abstimmung zwischen dem Gehalt an Lösungsmitteln in dem Beschichtungsmedium, der Auftragsgeschwindigkeit und - menge, der Schichtstärke und der Verdampfungsgeschwindigkeit der Lösungsmittel durch an sich bekannte technologische Maßnahmen. Die Verdampfungsgeschwindigkeit ist möglichst hoch einzustellen. Das erfordert eine rasche Erwärmung der aufgebrachten Schicht ohne dass Blasenbildung durch verdampfendes Lösungsmittel eintritt und eine rasche Abführung des verdampften Lösungsmittels durch geeignete Luftführung.

Die technologischen Bedingungen sollten ferner so gewählt werden, dass die Trocknungsgeschwindigkeit höher ist als die Kristallisationsgeschwindigkeit der gelösten Metallverbindungen, um möglichst kleine Kristalle der Metallverbindungen in der Schicht auf dem Glas oder auf den verwendeten Folien zu erhalten. Kleine Kristalle der Metallverbindungen tragen wesentlich dazu bei, dass der Kontakt zur Glasoberfläche möglichst innig sein kann.

Die Schichtdicke der aufgebrachten Beschichtungszusammensetzung ist ebenfalls ein Parameter, der die Geschwindigkeit und den Grad der Verfärbung beeinflusst. Geeignete, nicht-beschränkende Bereiche sind 50 nm bis 50 µm, vorzugsweise 100 nm bis 10 µm, besonders bevorzugt etwa 1-5 µm.

Das folgende, nicht-beschränkende Beispiel erläutert die Erfindung anhand einer bevorzugten Ausführungsform.

### BEISPIEL

Eine Beschichtungszusammensetzung wird aus den folgenden Komponenten:
4 ml AgNO₃-Lösung (50% in H₂O)
10 ml Bindemittel: 6 ml Klucel H (eine Hydroxypropylcellulose) in 1 % Ethanol (in H₂O) + 4 ml PEO (Polyethylenoxid) 8000 in 1% H₂O (in Ethanol)
Netzmittel (fakultativ): 2 ml Triton 100 in 10 % Ethanol (in H₂O)
14 , 15 ml H₂O
12,35 ml Ethanol
hergestellt,
welche eine Konzentration von 8,1 % (Masseprozent) AgNO₃ und ein Volumenverhältnis von Ethanol:Wasser von 1:1 in der Zusammensetzung aufweist.

Diese Beschichtungszusammesetzung wird mit einem Volumen von 50 µl auf eine Fläche von 1 cm² der zinnreichen Badseite von Floatglas aufgebracht. Nach einem Trocknungsschritt bei Raumtemperatur wird das Glas bei 280°C 4 h thermisch behandelt und anschließend die Lösung durch Spülen mit Wasser entfernt. Im Inneren des Glases befindet sich nun eine 1 cm² große braune Verfärbung des Glases.

## Patentansprüche

1. Verfahren zur temperaturinduzierten Markierung von Glas, **dadurch gekennzeichnet, dass** eine Beschichtungszusammensetzung, die mindestens eine Metallverbindung und ein Bindemittel enthält, auf das Glas aufgebracht wird und das Glas einer mehrstündigen Wärmebehandlung bei einer Temperatur von weniger als 400°C unterworfen wird, wobei Metallionen aus der Beschichtungszusammensetzung in das Glas diffundieren und dort von Ionen im Glas oder durch externe Reduktionsmittel zu den entsprechenden Metallatomen reduziert werden, welche sich zu Partikeln zusammenlagern und das Glas verfärben.

2. Verfahren nach Anspruch 1, **dadurch gekennzeichnet, dass** die Wärmehandlung bei einer Temperatur im Bereich von etwa 280°C bis etwa 320°C durchgeführt wird.

3. Verfahren nach Anspruch 1 oder 2, **dadurch gekennzeichnet, dass** die Dauer der Wärmebehandlung mindestens 4 Stunden beträgt.

4. Verfahren einem der Ansprüche 1 bis 3, **dadurch gekennzeichnet, dass** die Beschichtungszusammensetzung mindestens,eine Silberverbindung, Goldverbindung oder Kupferverbindung umfasst.

5. Verfahren nach einem der Ansprüche 1-4, **dadurch gekennzeichnet, dass** die Beschichtungszusammensetzung Silbernitrat umfasst.

6. Verfahren nach Anspruch 5, **dadurch gekennzeichnet, dass** die Beschichtungszusammensetzung eine Mischung von Silbernitrat und Kaliumnitrat umfasst.

7. Verfahren nach Anspruch 6, **dadurch gekennzeichnet, dass** die Beschichtungszusammensetzung eine eutektische Mischung von Silbernitrat und Kaliumnitrat umfasst.

8. Verfahren nach einem der Ansprüche 1-7, **dadurch gekennzeichnet, dass** das Glas ein Glas mit einer relativ zinnreichen Oberfläche und einer relativ zinnarmen Oberfläche ist und die Beschichtungszusammensetzung auf die relativ zinnreiche Oberfläche aufgebracht wird.

9. Verfahren nach einem der Ansprüche 1-8, **dadurch gekennzeichnet, dass** der Grad der Glasverfärbung und/oder die Farbe des markierten Glases durch die Höhe der Temperatur und die Dauer der Wärmebehandlung einstellbar ist.

10. Verfahren nach einem der Ansprüche 1-9, **dadurch gekennzeichnet, dass** ein durch ein Prüfverfahren vorgegebener Grad einer Verfärbung nach frühestens 4 Stunden auftritt.

11. Verfahren nach einem der Ansprüche 1-10, **dadurch** gekenzeichnet, dass die Konzentration der reduzierbaren Metallverbindung in der Beschichtungszusammensetzung 1-30, vorzugsweise 4-14 Masseprozent beträgt.

12. Verfahren nach einem der Ansprüche 1-11, **dadurch** gekenzeichnet, dass die Dicke der auf das Glas aufgebrachten Beschichtung im Bereich von 100 nm bis 10 µm liegt.

13. Verfahren nach einem der Ansprüche 1-12, **dadurch gekennzeichnet, dass** das Aufbringen der Beschichtungszusammensetzung einen Auftrag der Zusammensetzung in flüssig gelöstem Zustand umfasst.

14. Verfahren nach Anspruch 13, **dadurch gekennzeichnet,dass** der Auftrag der Beschichtungszusammensetzung ein Aufsprühen, Ausgießen, Aufwalzen oder Aufrakeln umfasst.

15. Verfahren nach einem der Ansprüche 1-12, **dadurch gekennzeichnet, dass** das Aufbringen der Beschichtungszusammensetzung einen Auftrag der Zusammensetzung im festen Schichtzustand umfasst.

16. Verfahren nach Anspruch 15, **dadurch gekennzeichnet, dass** das Aufbringen der Beschichtungszusammensetzung ein Anhaften einer selbsttragenden Folie der Beschichtungszusammensetzung auf der Glasoberfläche umfasst.

17. Verfahren nach Anspruch 15, **dadurch gekennzeichnet, dass** das Aufbringen der Beschichtungszusammensetzung ein Anhaften eines Verbundes aus der Beschichtungszusammensetzung und einer Trägerfolie auf der Glasoberfläche umfasst.

18. Verfahren nach Anspruch 16 oder 17, **dadurch gekennzeichnet, dass** die Folie der Beschichtungszusammensetzung oder der Trägerfolie selbstklebend ist.

19. Beschichtungszusammensetzung, insbesondere für die temperaturinduzierte Markierung von Glas, umfassend eine eutektische Mischung von mindestens zwei Metallsalzen sowie gegebenenfalls ein Bindemittel.

20. Beschichtungszusammensetzung nach Anspruch 19, **dadurch gekennzeichnet, dass** die eutektische Mischung von Metallsalzen Silbernitrat und Kaliumnitrat umfasst.

21. Nachweisverfahren zur Feststellung der Dauer und/oder angewandten Temperatur einer Wärmebehandlung bei einem Glas, auf welches eine Beschichtungszusammensetzung wie in einem der Ansprüche 1, 4 - 7 und 11 definiert oder eine Beschichtungszusammensetzung nach einem der Ansprüche 19 und 20 aufgebracht und welches einer solchen Wärmebehandlung unterworfen wurde, wobei die Verfärbung des Glases mit der Verfärbung eines Referenzglases, das einer bekannten Wärmebehandlung unterworfen wurde, verglichen oder mit einem Photometer gemessen und mit Referenzwerten verglichen wird.

22. Nachweisverfahren zur Prüfung, ob ein Glas, auf welches eine Beschichtungszusammensetzung wie in einem der Ansprüche 1, 4 - 7 und 11 definiert oder eine Beschichtungszusammensetzung nach einem der Ansprüche 19 und 20 aufgebracht wurde, einer Wärmebehandlung von 4 Stunden bei 280 - 320 °C unterworfen wurde, wobei die Verfärbung des Glases mit der Verfärbung eines Referenzglases, das dieser Wärmebehandlung bekanntermassen unterworfen wurde, verglichen oder mit einem Photometer gemessen und mit Referenzwerten verglichen wird.
